# EUROPEAN PATENT APPLICATION

(11) **EP 3 067 138 A1**
(43) Date of publication of application: **14.09.2016**
(21) Application number: 16159857.8
(22) Date of filing: 11.03.2016
(51) Int. Cl.: B23D 53/04, B23D 53/08, B27B 1/00, B23D 55/08

(54) **METHOD FOR MANUFACTURING PIECES OF WOOD**

(30) Priority: 13.03.2015 FI 20150073
(71) Applicant: Lamminmäki, Seppo, 39920 Suomijärvi (FI)
(72) Inventor: Lamminmäki, Seppo, 39920 Suomijärvi (FI)
(74) Representative: Kolster Oy Ab

(57) **Abstract**

A method for industrial manufacture of pieces of wood (26) from tree trunks (2) which have at least been delimbed and wherein the manufacture as one part comprises feeding discs of wood (3) cut off from said trunks into a gap between a pair of rollers (15), (19) in order to form and detach pieces of wood (3) from said discs (3) by means of blade devices provided on a surface of both rollers (15), (19) in the pair of rollers for detaching pieces from the disc. The method comprises carrying out the cut-off sawing of the discs of wood (3) by means of one or more movable sawing devices (4) whose blade (25) is arranged to run in a transverse direction via ends of a plurality of adjacent tree trunks (2) located in a sawing station (1), at a distance from the ends which is a desired thickness for the disc and, subsequently, guiding the discs of wood (3) produced by sawing into the gap between said pair of rollers by means of a conveyor device.

## Description

The invention relates to a method for industrial manufacture of pieces of wood from tree trunks which have at least been delimbed and wherein the manufacture as one part comprises feeding discs of wood that have been cut off from said trunks into a gap between a pair of rollers in order to form and detach pieces of wood from said discs by means of blade devices provided on a surface of both rollers in the pair of rollers for detaching pieces from the discs.

An apparatus for the manufacture of pieces of wood is previously known from Finnish utility model 9956, wherein the apparatus comprises producing pieces of wood from a disc of wood, the disc being fed into the gap between a rotating pair of rollers, such that pointed ridge ribs which are located on the surfaces of these rollers and protrude therefrom and reside circumferentially on one roller while transversely on the other, cut off quadrangular pieces from the disc, the pieces having a thickness equal to that of the disc. This utility model discloses as the manufacturing apparatus the operation of the pair of rollers for producing the pieces.

Utility model No. 9956 discloses a very quick manufacturing step for detaching pieces of wood from the discs, since the rollers may be rotated for instance at 1000 to 2000 r/min, in practice enabling as many as 10 to 15 discs to be fed into the gap per second. However, the prior art includes no knowledge of nor solutions for cutting off discs from tree trunks at a pace that would enable construction of a process for manufacturing pieces of wood that would be as fast as possible and wherein all parts would operate in an optimal manner and it would be possible to produce discs of wood with a capacity equal to that of the rest of the process.

In order to eliminate these disadvantages, the present invention solves all sub-areas in the process so as to achieve clear improvement over the prior art. The method according to the invention is characterized in that the method comprises carrying out the cut-off sawing of the discs of wood by means of one or more movable sawing devices whose blade is arranged to run in a transverse direction via ends of a plurality of adjacent tree trunks located in a sawing station, at a distance from the ends which is a desired thickness for the disc and, subsequently, guiding the discs of wood produced by sawing into the gap between said pair of rollers by means of a conveyor device.

An advantage of the invention is that a method is provided for manufacturing pieces of wood wherein all sub-areas of the manufacturing process are capable of approximately equal capacity, thus providing an optimality-seeking continuous manufacturing process. This is advantageous particularly in that no intermediate storage is necessary for the discs cut off from the tree trunks and, on the other hand, the pair of rollers detaching pieces of wood from the discs does not need to rotate empty.

In the following, the invention will be explained in closer detail with reference to the accompanying drawing, in which
Figure 1 shows sawing off discs of wood in a sawing station.
Figure 2 shows supporting a disc of wood to be sawed, provided with two or more spikes.
Figures 3a, b, c, d show a solution of two saws and sawing stations.
Figure 4 schematically shows a method for manufacturing pieces of wood.
Figure 5 is a diagonal view showing a wood piece machine.
Figure 6 is a schematic side view showing a product drying device.

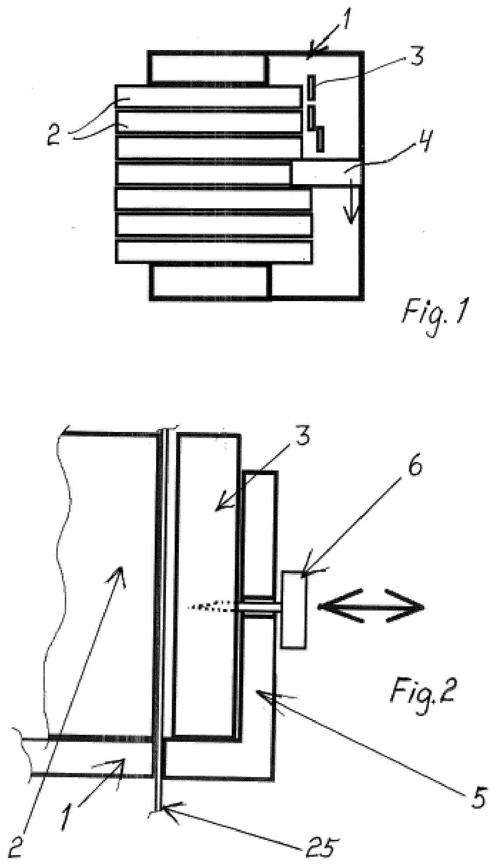

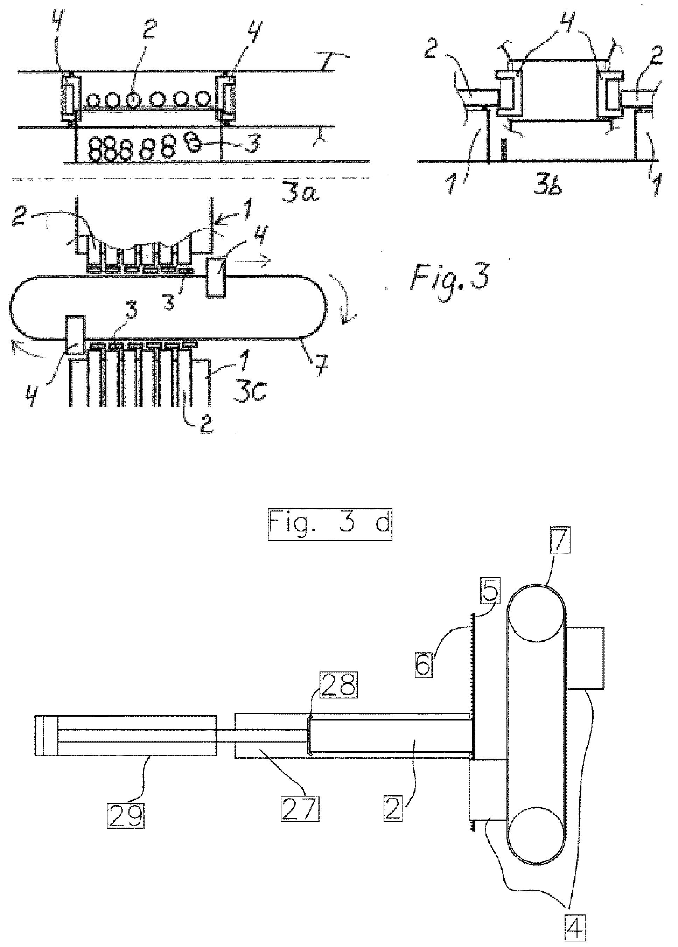

Figure 1 is a schematic top view showing a sawing station 1 wherein discs 3 are cut off from tree trunks 2 by means of a movable sawing device 4. The tree trunks 2 are placed in adjacent feed troughs along which a tree is fed by a feeding device against a counterwall so that the ends of the tree trunks 2 are all aligned at an end of the sawing device 4 for the sawing device 4 to cut off discs 3 of equal thickness from the tree trunks. In accordance with Figure 3d, the feeding device comprises parts 27, 28, and 29. The number of hydraulic cylinders 29 of the feeding device equals that of tree-guiding troughs 27, which form a sawing station 1 known from Figures 3 a to c. Cylinder heads are provided with a pressure plate 28 attached thereto to press the tree in a longitudinal direction against a counterpart while the trough 1 guides the tree trunk in a correct direction and prevents the tree from turning crosswise in the sawing station.

Figure 2 shows the tree trunk 2 driven against a counterpart 5, a disc of wood 3 being cut off therefrom by means of a blade 25 of the sawing device. In order for the tree trunk 2 to stay in place during sawing also when the last discs 3 are being cut off therefrom, spikes 6 are arranged in connection with the counterpart 5 for gripping the end of the tree trunk 2 from the counterpart 5 to keep the tree trunk 2 in place. The spikes 6 do not extend into the sawing line. With the spikes 6 extended, it is possible to use the hydraulic cylinder 29 and the pressure plate 28 of the feeding device to drive the tree trunks 2 so as to connect with the spikes 6.

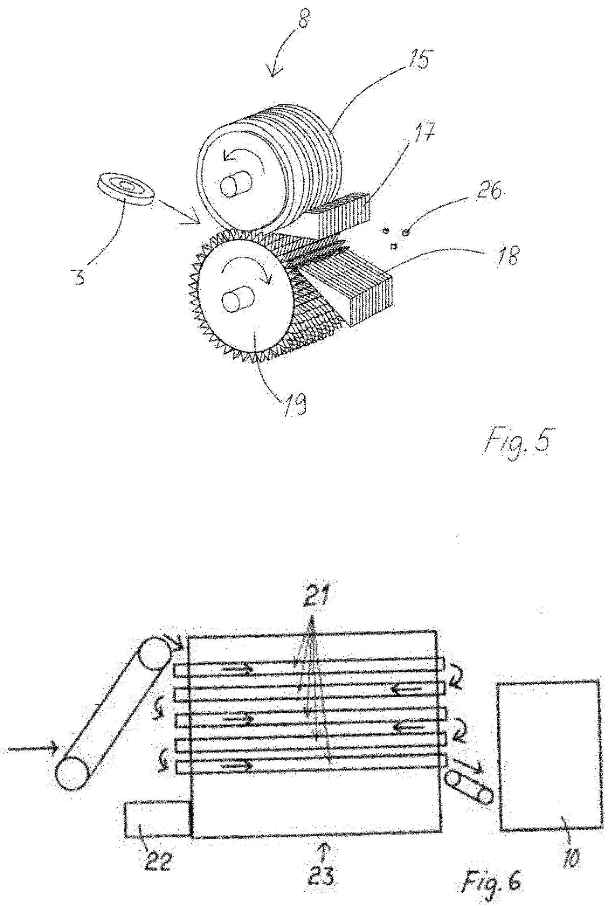

After sawing, the entire row of spikes 6 is retracted, at least to the level of the counterpart. The discs of wood 3 then drop onto an underlying conveyor track, which takes them to a wood piece machine (Figures 5 and 6). Next, the spikes 6 are extended again, and the tree trunk 2 is by means of the hydraulic cylinder 29 and the pressure plate 28 of the feeding device driven up to the counterpart 5 and to connect with the spikes 6 for another sawing operation.

Figures 3 a to c show, in three views a to c, a solution of two sawing stations 1 which are separate stations, in which case a conveyor track 7 is constructed for the sawing devices 4 for the two separate sawing devices 4 to move along. The track, which is oval in shape, has straight lines at the sawing stations 1. From both stations, the discs of wood 3 drop onto the same conveyor. Figure 3d shows in greater detail a tree trunk feeding device comprising a hydraulic cylinder 29 and a pressure plate 28 which push the tree trunks in a trough 27 guiding them. In the sawing station, the tree feed parallel with the tree trunk 2 may also be implemented by a plurality of long hydraulic cylinders 29 to which the guide plate 28 is attached and which push the trees 2 to be sawed in the troughs 27 guiding their direction, and which ensure that the tree 2 stays in place and the counterpart 5 operates appropriately.

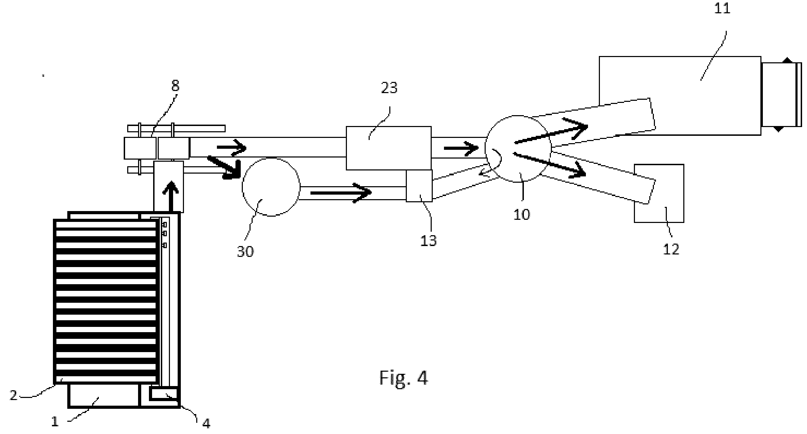

Figure 4 schematically shows a process for manufacturing pieces of wood, from the sawing station 1 of one sawing device 4 to a wood piece machine 8, therefrom to a drying unit 9 receiving pieces of wood 26, sawdust, bark, and deficient pieces of wood. From the drying unit 9, the products are conveyed to a screen 10, from which intact pieces of wood are taken for packaging 12 or for instance onto a platform of a vehicle.

Figure 5 shows the wood piece machine 8 which machines the discs of wood 3 into pieces of wood 26 between pairs of rollers 15 and 19. The discs of wood 3 are conveyed into a gap between a pair or rollers 15, 19 as shown by the arrow. The roller 15 has on its surface flat-bottomed grooves turned therein which, in depth, approximately equal the thickness of the disc 3. Between the grooves, then, remain rings having sharpened outer edges. The disc 3 is here cut in the longitudinal direction, the width being determined by the width of the grooves and the thickness by the original thickness of the disc. Between the rollers 15 and 19, the transverse blades included in the surface of the roller 19 cut the disc in the longitudinal direction, producing pieces of wood 26 to be thrown out of this gap.

Figure 5 further shows a doctor blade 17 which extends to the grooves of the roller 15 and throws the pieces of wood 26 out of the grooves of the roller 15. An additional doctor blade 18 throws pieces of wood 26 still partly rotating on the roller 19 off the roller 19. The rollers may be rotated for instance at a rotation speed of 1000 to 2000 r/min, meaning that their capacity to receive discs of wood 3 is about 10 to 15 discs/s.

The sawdust generated in the sawing station 1 is screened out in the next step of the process, for example in a drum screen 30 (Figure 4). The screened sawdust is conveyed along a line system of its own to the same drying unit 23 as the pieces of wood 26.

Figure 6 shows a drying unit 26 which receives the products (pieces of wood and debris) from the wood piece machine 8 through the drum screen 30. The pieces of wood 26 are conveyed to a drying screw and to its horizontal pipes 21, wherein they travel through the drying unit 23 several times in order to achieve sufficient drying. Inside the pipes 21, on the horizontal sections, are provided conveyor screws to forward the material in the pipes 21. A burner 22 is used for keeping the temperature of the drying unit 23 at a value of 105°C, for instance. The length of the pipes 21 and the drying unit 23 is adjusted such that the material dries up to a target humidity after passing through the drying unit.

The sawdust conveyed to the drying unit 23 may be driven through a screw line system 21 similar to that provided for the main product, but the line system is separate so as to enable its properties to be optimized for drying sawdust. The dried sawdust is conveyed to a fuel tank 13 for the drying unit 23 to derive its fuel therefrom.

After the drying unit 23, the pieces of wood are further driven through a drum screen 10. In this drum screen 10, debris is separated from the pieces of wood and conveyed to the same fuel tank 13 as that used for the previously separated sawdust, to be used as fuel for the drying unit 23 of the process therefrom. The screening may also be carried out in earlier steps, such as before the drying step.

## Claims

1. A method for industrial manufacture of pieces of wood (26) from tree trunks (2) which have at least been delimbed and wherein the manufacture as one part comprises feeding discs of wood (3) cut off from said trunks into a gap between a pair of rollers (15), (19) in order to form and detach pieces of wood (3) from said discs (3) by means of blade devices provided on a surface of both rollers (15), (19) in the pair of rollers for detaching pieces from the disc, **characterized in that** the method comprises carrying out the cut-off sawing of the discs of wood (3) by means of one or more movable sawing devices (4) whose blade (25) is arranged to run in a transverse direction via ends of a plurality of adjacent tree trunks (2) located in a sawing station (1), at a distance from the ends which is a desired thickness for the disc and, subsequently, guiding the discs of wood (3) produced by sawing into the gap between said pair of rollers by means of a conveyor device.

2. A method as claimed in claim 1, **characterized in that** the sawing station (1) has one row of adjacent tree trunks (2) while one sawing device (4) is provided, which is arranged to carry out the sawing of new discs (3) during its return motion.

3. A method as claimed in claim 1, **characterized in that** tree trunks (2) are arranged adjacently in two separate rows, and at least two sawing devices (4) are provided with a track (7) running via each row, the sawing devices (4) cutting off discs of wood (3) alternately from each row.

4. A method as claimed in any one of claims 1 to 3, **characterized in that** in the sawing station (1), in order to cut off the discs of wood (3), the adjacent tree trunks (2) are both first and after the cutting off of every disc of wood (3) moved against a common counterpart (5) so that the ends of the tree trunks (2) to be sawed become aligned.

5. A method as claimed in any one of claims 1 to 4, **characterized in that** the counterpart (5) comprises a member for gripping the disc of wood (3) to be cut off, such as a spike (6) protruding from the counterpart (5) into the disc of wood (3) to keep the cut-off disc of wood (3) in place as long as necessary, the disc of wood (3) being dropped from the sawing station (1) onto the conveyor by retracting the spike (6).

6. A method as claimed in any one of claims 1 to 5, **characterized in that** in the sawing station, the tree feed parallel with the tree trunk (2) is implemented by means of long hydraulic cylinders (29) to which a guide plate (28) is attached and which push the trees (2) to be sawed in troughs (27) guiding their direction, and which ensure that the tree (2) stays in place.

7. A method as claimed in any one of claims 1 to 6, **characterized in that** products generated in the method, such as sawdust, pieces of wood (26), bark, disfigured pieces and debris, are dried by conveying them by means of a conveyor, such as a screw conveyor (21), through a drying unit (23).

8. A method as claimed in any one of claims 1 to 7, **characterized in that** from among the products generated in the method, acceptable pieces of wood (26) are separated from the rest of the generated products by screening.
